# EUROPÄISCHE PATENTANMELDUNG

(11) **EP 1 174 196 A2**
(43) Veröffentlichungstag der Anmeldung: **23.01.2002**
(21) Anmeldenummer: 01117190.7
(22) Anmeldetag: 16.07.2001
(51) Int. Cl.: B09C 1/08

(54) **Verfahren und Elektrode zum elektrokinetischen Sanieren von schadstoffbelastetem,Porenflüssigkeit enthaltenden Erdboden**

(30) Priorität: 19.07.2000 DE 10035497
(71) Anmelder: EnBW Energie Baden-Württemberg AG, 76131 Karlsruhe (DE)
(72) Erfinder: Haus, Reiner, Dr., 92224 Amberg (DE); Penz, Michael, 76327 Pfinztal (DE); Fader, Hansjörg, 76227 Karlsruhe (DE)
(74) Vertreter: Kaiser, Magnus, Dipl.-Phys.

(57) **Zusammenfassung**

Es wird ein Verfahren zum elektrokinetischen Sanieren von schadstoffbelastetem, Porenflüssigkeit enthaltenden Erdboden sowie eine Elektrode zur Verwendung in diesem Verfahren vorgeschlagen. Hierbei werden wenigstens zwei formflexible Elektroden vorzugsweise im Horizontalbohrverfahren in den zu sanierenden Bodenbereich eingebracht, wo sie elektrischen Kontakt mit dem Porenwasser erhalten. Die Elektroden werden dann an eine Gleichstromquelle angeschlossen, so dass die Schadstoffe mittels elektrokinetischer, vorzugsweise elektroosmotischer Prozesse im Erdboden mobilisiert und an den Elektroden gesammelt werden. Die Elektroden sind vorzugsweise als formflexible Horizontalfilterelektroden ausgebildet.

## Beschreibung

Die Erfindung betrifft ein Verfahren zum Sanieren von schadstoffbelastetem, Porenflüssigkeit enthaltenden Erdboden, bei dem wenigstens zwei Elektroden im zu sanierenden Bodenbereich in elektrischen Kontakt mit dem Porenwasser gebracht und zur Bildung mindestens einer Anode sowie mindestens einer Kathode an eine Gleichstromquelle angeschlossen werden, so dass die Schadstoffe mittels elektrokinetischer Prozesse im Erdboden mobilisiert und an den Elektroden gesammelt werden, sowie eine Elektrode für ein solches Verfahren.

Seit das gesundheitsgefährdende Potential von schadstoffbelasteten Böden allgemein bekannt ist, kommt der Sanierung solcher Böden erhebliche Bedeutung zu. Die häufigsten Schadstoffe, die eine Dekontaminierung notwendig machen, sind organische Verbindungen, wie chlorierte Kohlenwasserstoffe, sowie Schwermetalle. Nach wie vor ist es nicht unüblich, die schadstoffbelasteten Bodenbereiche auszukoffern, um sie zu deponieren oder einer thermischen Behandlung zuzuführen. Abgesehen von den hohen Kosten für die Erdbewegung und die Deponierung bzw. thermische Behandlung sowie für die üblichen Wasserhaltungs- und Sicherungsmaßnahmen mit Spundwänden, Vereisungen und dergleichen, verbietet sich das Auskoffern bei noch bebauten oder bereits wiederbebauten Altlastenstandorten jedoch ganz.

Es sind daher verschiedene in situ-Verfahren zum Sanieren von schadstoffbelasteten Bodenbereichen bekannt geworden, wie z. B. hydraulische und pneumatische Verfahren. Diese Verfahren sind allerdings nur bei guter hydraulischer Durchlässigkeit des Bodens einsetzbar; sie versagen in feinklastischen Sedimenten.

Aus der DE 39 20 342 C1 ist ein Verfahren zum Sanieren von schadstoffbelastetem Erdboden mittels elektrokinetischer Prozesse bekannt geworden, bei dem zwei oder mehr Elektroden in den Boden eingebracht und an eine Gleichstromquelle angeschlossen werden. Das sich zwischen den Elektroden ausbildende elektrische Feld verursacht eine elektrophoretische Wanderung von hierzu fähigen Schadstoffen, also im wesentlichen kolloidalen, geladenen Partikeln: Positiv geladene Partikel wandern zur Kathode, negativ geladene zur Anode. Das Porenwasser fungiert dabei als leitendes Medium, durch das die geladenen Schadstoffe transportiert werden. Die Schadstoffe werden an den Elektroden in Reservoirs gesammelt und von Zeit zu Zeit entfernt.

Elektrokinetische Prozesse im Erdboden sind jedoch nicht auf die elektrophoretische Wanderung der Schadstoffe beschränkt: Elektrokinetische Verfahren werden in der Geotechnik bereits seit den 1970er Jahren zur Entwässerung, Böschungsstabilisierung und Bodenverbesserung von bindigen Sedimenten eingesetzt. Hierbei wird hauptsächlich der elektroosmotische Effekt ausgenutzt, der eine einsinnige Bewegung des Porenwassers über diffusive lonenschichten an der kapillaren Grenzfläche zwischen Porenwasser und Mineraloberfläche erzeugt. Neben der Elektromigration, also dem direkten lonentransport, und der Elektrophorese, also einer Bewegung von geladenen suspendierten Kolloiden und Bodenteilchen im elektrischen Feld, wird die Elektroosmose als dritter Hauptmechanismus von elektrokinetischen Transportprozessen in Porenflüssigkeit enthaltenden Bodenmaterialien angesehen.

Der vorliegenden Erfindung liegt die Aufgabe zugrunde, ein elektrokinetisches Sanierungsverfahren der eingangs genannten Art hinsichtlich seiner Einsatzmöglichkeiten und seiner Effizienz zu verbessern.

Gelöst ist diese Aufgabe durch ein Verfahren mit den Merkmalen des beigefügten Patentanspruchs 1 sowie durch eine Elektrode gemäß der im beigefügten Patentanspruch 8 niedergelegten Merkmalskombination zur Durchführung eines elektrokinetischen Sanierungsverfahrens.

Vorteilhafte Ausgestaltungen des erfindungsgemäßen Verfahrens finden sich in den Ansprüchen 2 bis 7; vorteilhafte Weiterbildungen der erfindungsgemäßen Elektrode sind in den Ansprüchen 9 bis 20 niedergelegt.

Erfindungsgemäß ist also erkannt worden, dass die bei elektrokinetischen Verfahren bislang ausnahmslos eingesetzten starren Elektroden, die üblicherweise von einer Art Brunnen umgeben sind und mit vertikalen Bohrungen in den Erdboden eingebracht werden, nicht immer optimal sind, selbst wenn der zu sanierende Erdboden mit einem im mathematischen Modell gut beherrschbaren, vorzugsweise wabenförmigen Netz von konventionellen Elektroden überdeckt wird. Die nach der Erfindung vorgeschlagene Verlegung von formflexiblen Elektroden ermöglicht dagegen eine optimale Anpassung des elektrischen Feldes und des dadurch induzierten Schadstofftransportes an die Ausbildung des Schadensherdes und des geologischen Aufbaus des zu sanierenden Untergrundbereiches. Die für die elektrokinetischen Prozesse angelegten elektrischen Felder zwischen den Elektroden sind nicht mehr auf punkt-, rauten- oder wabenförmig angeordnete Elektrodensysteme beschränkt, sondern nunmehr frei wählbar. Nicht zuletzt wird durch den erfindungsgemäßen Einsatz von formflexiblen Elektroden erstmals eine Verlegung der Elektroden im Horizontalbohrverfahren möglich, denn dieses erzeugt in aller Regel keine geradlinigen Bohrlöcher. Mit der Verlegung von formflexiblen Horizontalelektroden jedoch kann ein elektrokinetisches Sanierungsverfahren auch in vollständig überbauten Bodenbereichen durchgeführt werden; der tiefbautechnische Aufwand für die Sanierung wird hierbei auf ein Minimum begrenzt.

In feinkörnigen Böden, bei denen die anderen bekannten in situ-Verfahren, wie hydraulische und pneumatische Verfahren, auf Probleme stoßen, entfaltet die Elektrokinetik aufgrund ihrer besonderen Transportmechanismen den höchsten Wirkungsgrad. Ein Hauptanwendungsgebiet ergibt sich durch die gezielte Ausnutzung von elektroosmotischen Transportmechanismen, wobei insbesondere organische Schadstoffe, wie chlorierte Kohlenwasserstoffe mit dem zur Kathode transportieren Porenwasser aus dem feinkörnigen Boden herausgezogen werden. Da elektroosmotische Prozesse üblicherweise einen Flüssigkeitstransport von der Anodenseite zur Kathodenseite verursachen, ist es einerseits vorteilhaft, wenn dem Erdboden im Bereich der Anode Wasser zugeführt wird, um den elektrischen Kontakt zwischen der Anode und dem Porenwasser nicht durch Austrocknung abreißen zu lassen; andererseits bietet es Vorteile, wenn wenigstens ein Teil der Elektroden an einem Drainagesystem angebracht wird, das im wesentlichen für die Ableitung des die Schadstoffe transportierenden Eluats verwendet wird. Besonders einfach ist das Ableiten des Eluats aus dem zu sanierenden Bodenbereich, wenn das Drainagesystem im wesentlichen horizontal durch den Boden verläuft, also insbesondere mit einem Horizontalbohrverfahren verlegt worden ist. Ein gezielt in das Drainagesystem eingebrachtes Gefälle kann für eine selbsttätige Ableitung des schadstoffführenden Eluats sorgen.

Die erfindungsgemäß vorgeschlagene Elektrode für die elektrokinetische Sanierung von schadstoffbelastetem, Porenflüssigkeit enthaltenden Erdboden umfasst ein formflexibles Stützrohr aus nicht leitendem, chemisch inerten Material und ist zumindest teilweise von einem Elektrodennetz oder Elektrodengitter aus elektrisch leitendem Material umhüllt. Neben den eben beschriebenen, erheblichen Vorteilen der formflexiblen Ausgestaltung ergeben sich auch dadurch Vorteile, dass das Elektrodennetz oder das Elektrodengitter außen angeordnet ist und somit eine hervorragende elektrische Anbindung an den zu sanierenden Bodenbereich gewährleistet. Auch eine Wiederverwertung des meist hochwertigen elektrisch leitenden Materials wird hierdurch erleichtert.

Besondere Vorteile ergeben sich, wenn das Stützrohr flüssigkeitsdurchlässig ausgebildet ist und insoweit Teil eines Drainagesystems sein kann. Insbesondere an der Kathode wird hierdurch sichergestellt, dass die aus dem Boden entnommene Porenflüssigkeit durch das Elektrodennetz oder -gitter hindurch in das Stützrohr gelangen kann, dort gesammelt und unter Vermeidung vertikaler Verschleppungen des Schadstoffes in unkontaminierte Bereiche abgeleitet wird.

Zweckmäßigerweise wird die erfindungsgemäße Elektrode unterschiedlich aufgebaut, je nachdem ob sie als Kathode oder als Anode fungferen soll:

Bei einer als Anode ausgebildeten Elektrode ist vorzugsweise ein Perkolationsrohr zur Zuführung von Wasser vorgesehen, das im Inneren des Stützrohrs angeordnet sein kann, während das Stützrohr umfangsverteilte Öffnungen aufweist. Beispielsweise kann ein perforiertes Perkolationsrohr konzentrisch im Stützrohr angeordnet sein und mit vorgespanntem Wasser beaufschlagt werden, so dass dieses Wasser auf die Innenwandung des Stützrohrs gesprüht wird. Durch dessen umfangsverteilte Öffnungen gelangt das Wasser in den Kontaktbereich zwischen dem Elektrodennetz bzw. Elektrodengitter und dem Erdboden, wo es eine durch elektroosmotische Prozesse verursachte Austrocknung verhindert. Zweckmäßigerweise ist das Stützrohr dann mit einem Abfluss zum Ausleiten von durch das Perkulationsrohr überschüssig zugeführtem Wasser versehen.

Weitere besondere Vorteile ergeben sich dann, wenn zwischen dem Stützrohr und dem Elektrodennetz bzw. dem Elektrodengitter eine Geomembrane angeordnet ist. Diese Geomembrane verhindert Ausspülungsvorgänge durch die Wasserzufuhr und gewährleistet, dass immer nur so viel frisches Wasser in den Kontaktbereich zwischen der Anode und dem Erdboden gelangt, wie für eine Befeuchtung dieses Kontaktbereichs notwendig ist.

Wird die erfindungsgemäße Elektrode als Kathode verwendet, ist sie vorteilhafterweise mit einem Abfluss zur Entnahme von elektroosmotisch gewonnenem Eluat versehen. Besonders vorteilhaft ist hierbei, wenn das Stützrohr flüssigkeitsdurchlässig ausgebildet und die Innenwandung des Stützrohrs zumindest teilweise mit einer Geomembrane ausgekleidet ist. Das mittels elektroosmotischer Prozesse an die Kathode transportierte Porenwasser kann dann als Eluat im Inneren des Stützrohrs gesammelt und von dort abgeleitet werden. Die Geomembrane verhindert dabei eine Suffosion aus dem die Kathode unmittelbar umgebenden Bodenbereich sowie ein Eindringen von Bodenpartikeln in das Stützrohr. Um eine druckresistente Dichtheit der Geomembrane zu erreichen, kann sie zwischen dem Stützrohr und einem zusätzlichen Innenrohr positioniert werden, wobei das Innenrohr vorzugsweise dafür sorgt, dass die Geomembrane mit dem nötigen Anpressdruck an die Innenwandung des Stützrohres angedrückt wird. Der Abfluss der als Kathode ausgebildeten Elektrode sollte dann in Verbindung mit dem Ringraum zwischen dem Stützrohr und dem Innenrohr stehen, um eine geordnete Ableitung des durch die Geomembrane hindurchtretenden Eluats zu gewährleisten.

Zur Unterstützung der Porenwasserentnahme kann das Innere des Stützrohrs mit Unterdruck beaufschlagt werden. Anstatt das Eluat mitsamt den mitgeführten Schadstoffen zu entnehmen, können die Schadstoffe auch gleich im Stützrohr in einem Aktivkohlefilter gesammelt werden. Daneben ist es auch denkbar, die Schadstoffe gleich an der Elektrode durch Redoxreaktionen zu zerstören.

Wenn die erfindungsgemäße Elektrode - insbesondere, wenn sie als Kathode eingesetzt wird - horizontal durch den zu sanierenden Bodenbereich verlegt wird, ist es besonders vorteilhaft, wenn das Stützrohr nur in einem obenliegenden Umfangsbereich flüssigkeitsdurchlässig ausgebildet ist. Im unteren Umfangsbereich bildet das Stützrohr dann eine Rinne, mit deren Hilfe das Eluat auf sichere und einfache Art und Weise aus dem Elektrodensystem ausgeleitet werden kann.

Zwei Ausführungsbeispiele einer erfindungsgemäßen Elektrode werden im folgenden anhand der beigefügten Zeichnungen beschrieben und näher erläutert. Es zeigen:
- Figur 1: eine Querschnittdarstellung einer als Anode ausgebildeten Elektrode;
- Figur 2: eine Querschnittdarstellung einer als Kathode ausgebildeten Elektrode.

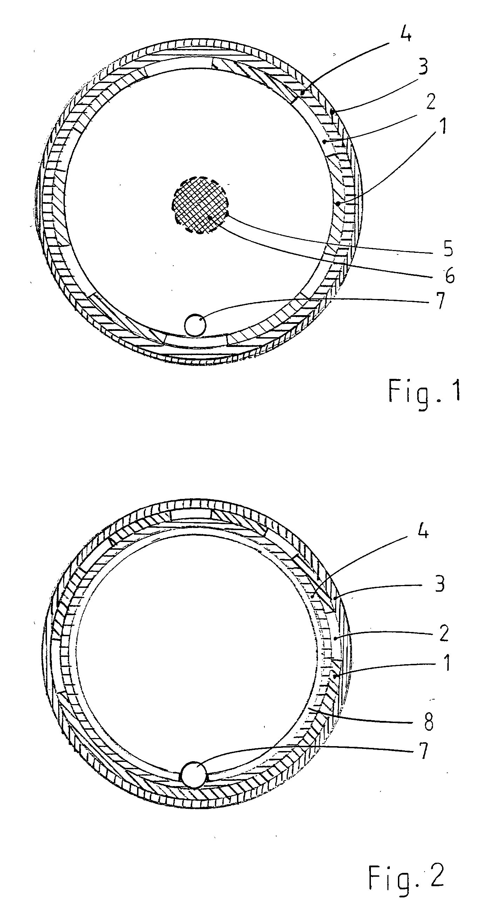

Die in Figur 1 im Querschnitt dargestellte, als Anode ausgebildete Elektrode besteht aus einem Stützrohr 1, das umfangsverteilt mit Längsschlitzen 2 versehen und von einem Elektrodennetz 3 umhüllt ist. Das Elektrodennetz 3 ist von einer Geomembrane 4 unterfüttert, die auf dem Stützrohr 1 aufliegt und beispielsweise aus einem Filtervlies oder einem Geotextil besteht. Konzentrisch zum Stützrohr 1 ist ein perforiertes Perkolationsrohr 5 installiert, aus dem Wasser 6 unter Druck auf die Innenwandung des Stützrohrs 1 und die Längsschlitze 2 gesprüht wird. Hierdurch wird eine ständige Befeuchtung des unmittelbar an das Elektrodennetz 3 angrenzenden Erdbodenbereichs gewährleistet. Die Weite der Längsschlitze 2 wird nach der Durchlässigkeit des Erdbodens und dem daraus resultierenden Wasserbedarf bemessen. Die Geomembrane 4 verhindert hierbei Ausspülungen im Erdboden. Überschüssiges, vom Perkolationsrohr 5 herangeführtes Wasser, das nicht durch die Geomembrane 3 hindurchtritt, sammelt sich im unteren Bereich des Stützrohrinnenraums und wird durch einen Abfluss 7 entnommen.

Die in Figur 2 im Querschnitt dargestellte, als Kathode ausgebildete Elektrode besteht ebenfalls aus einem Stützrohr 1, das von einem Elektrodennetz 3 umgeben ist. Das Sützrohr 1 weist wiederum eine Anzahl von Längsschlitzen 2 auf, um den Durchtritt von Wasser bzw. Eluat zu ermöglichen. Da dieses an der Kathode jedoch in umgekehrter Richtung durch das Stützrohr 1 hindurchtritt, nämlich vom Erdboden in das Innere des Stützrohrs 1 hinein, ist die Geomembrane 4 nicht außen auf dem Stützrohr 1, sondern an dessen Innenwandung angeordnet. Da die Geomembrane 4 hier ebenfalls eine Suffosion des anstehenden Erdbodens verhindern soll, muss es an die Innenwandung des Stützrohrs 1 angepreßt werden. Dies übernimmt ein zusätzliches Innenrohr 8, das zusammen mit dem Stützrohr 1 einen Ringraum bildet, in dem die Geomembrane 4 angeordnet ist. Dieser Ringraum mündet zur Ableitung des durch die Längsschlitze 2 hindurchgetretenen Eluats in einen Abfluss 7, so dass das Innenrohr 8 auch Drainagefunktion innerhalb des Stützrohrs 1 übernimmt. In das Innenrohr 8 kann zusätzlich ein (nicht dargestellter) Aktivkohlesack eingeführt werden, um insbesondere bei leicht flüchtigen Kohlenwasserstoffen eine vollständige Erfassung der Schadstoffe zu gewährleisten.

Die in den Figuren 1 und 2 dargestellten Elektroden sind als formflexible Horizontalfilterelektroden ausgebildet, die im Horizontalbohrverfahren in den Untergrund eingezogen und an elektrischen Gleichstrom angeschlossen werden. Sehr deutlich ist das an der in Figur 2 dargestellten Kathode zu erkennen, da das dort verwendete Stützrohr 1 nur oberseitig geschlitzt ist und im unten liegenden Bereich keine Längsschlitze 2 aufweist, sondern geschlossen ist. Hierdurch wird eine horizontal liegende Rinne hergestellt, die bei entsprechendem horizontalen Gefälle sogar eine selbsttätige Ableitung des durch die Längsschlitze 2 in das Innere des Stützrohrs 1 eingetretenen Eluats ermöglicht. Unabhängig davon kann an den Abfluss 7 auch eine Vakuumpumpe angeschlossen werden, um die Entnahme des Eluats aus dem Erdboden zu unterstützen.

Die im Ausführungsbeispiel gezeigten Elektroden eignen sich besonders für die Sanierung von mit chlorierten Kohlenwasserstoffen kontaminierten, feinkörnigen Böden: Die im Porenwasser gelösten CKW's werden durch den mittels Horizontalfilterelektroden im feinkörnigen Boden elektroosmotisch angeregten Porenwasserfluß aus dem Boden gespült und können dann in den Elektrodenkammern gesammelt und über Pumpensysteme zur konventionellen Nachreinigung an die Oberfläche befördert werden. Es ist alternativ denkbar, die Schadstoffe in Aktivkohlefiltern in den Elektrodenkammern zu sammeln oder durch Redoxreaktionen an den Elektroden zu zerstören.

Es sei jedoch darauf hingewiesen, dass sich die Erfindung nicht auf die Ausführungsbeispiele beschränkt, sondern auf verschiedenste Arten realisiert werden kann.

Die vorliegende Erfindung bietet also die Möglichkeit, schadstoffbelastete Böden im in situ-Verfahren zu sanieren, und sie ist für die Dekontamination von organisch und von anorganisch belasteten Standorten geeignet. Mit den erfindungsgemäßen Verbesserungen ist es möglich, den mit Schadstoffen belasteten Teil des Erdbodens gezielt und tiefenspezifisch zu dekontaminieren, sogar in überbauten Erdbodenbereichen. Selbst scheinbar unlösbare Probleme bei der Sanierung kontaminierter Altstandorte, deren Untergrund aus einer Wechselfolge von tonigen und sandig-kiesigen Sedimenten besteht, werden mit der Erfindung beherrschbar.

### Bezugszeichenliste

- 1: Stützrohr
- 2: Längsschlitz
- 3: Elektrodennetz
- 4: Geomembrane
- 5: Perkolationsrohr
- 6: Wasser
- 7: Abfluss
- 8: Innenrohr

## Patentansprüche

1. Verfahren zum Sanieren von schadstoffbelastetem, Porenflüssigkeit enthaltenden Erdboden,
wobei wenigstens zwei Elektroden im zu sanierenden Bodenbereich in elektrischen Kontakt mit dem Porenwasser gebracht und zur Bildung mindestens einer Anode und mindestens einer Kathode an eine Gleichstromquelle angeschlossen werden, so dass die Schadstoffe mittels elektrokinetischer Prozesse im Erdboden mobilisiert und an den Elektroden gesammelt werden,
**dadurch gekennzeichnet,**
**dass** formflexible Elektroden verwendet werden.

2. Verfahren nach Anspruch 1,
**dadurch gekennzeichnet,**
**dass** die formflexiblen Elektroden so in den zu sanierenden Bodenbereich eingebracht werden, dass sich das zwischen ihnen ausbildende elektrische Feld an den geologischen Aufbau des Bodenbereiches und/oder an die Menge und Verteilung der Schadstoffe anpasst.

3. Verfahren nach einem der Ansprüche 1 oder 2,
**dadurch gekennzeichnet,**
**dass** die formflexiblen Elektroden im Horizontalbohrverfahren in den zu sanierenden Bodenbereich eingebracht werden.

4. Verfahren nach einem der Ansprüche 1 bis 3,
**dadurch gekennzeichnet,**
**dass** dem Erdboden im Bereich der Anode Wasser zugeführt wird.

5. Verfahren nach einem der Ansprüche 1 bis 4,
**dadurch gekennzeichnet,**
**dass** wenigstens ein Teil der Elektroden mit einem Drainagesystem verbunden wird.

6. Verfahren nach Anspruch 5,
**dadurch gekennzeichnet,**
**dass** das Drainagesystem im wesentlichen horizontal verlaufend in den zu sanierenden Bodenbereich eingebracht wird.

7. Verfahren nach einem der Ansprüche 1 bis 6,
**dadurch gekennzeichnet,**
**dass** ein mit organischen Schadstoffen, insbesondere chlorierten Kohlenwasserstoffen kontaminierter Erdboden saniert wird.

8. Elektrode für die elektrokinetische Sanierung von schadstoffbelastetem, Porenflüssigkeit enthaltenden Erdboden, insbesondere zur Durchführung des Verfahrens nach einem der Ansprüche 1 bis 7,
**dadurch gekennzeichnet,**
**dass** die Elektrode ein formflexibles Stützrohr (1) aus nicht leitendem, chemisch inerten Material umfasst, das zumindest teilweise von einem Elektrodennetz (3) oder Elektrodengitter aus elektrisch leitendem Material umhüllt ist.

9. Elektrode nach Anspruch 8,
**dadurch gekennzeichnet,**
**dass** das Stützrohr (1) flüssigkeitsdurchlässig ausgebildet ist.

10. Elektrode nach Anspruch 9,
**dadurch gekennzeichnet,**
**dass** das Stützrohr (1) Teil eines Drainagesystems ist.

11. Elektrode nach einem der Ansprüche 8 bis 10,
**dadurch gekennzeichnet,**
**dass** sie als Anode ausgebildet ist und ein Perkolationsrohr (5) zur Zuführung von Wasser (6) aufweist.

12. Elektrode nach Anspruch 11,
**dadurch gekennzeichnet,**
**dass** das Perkolationsrohr (5) im Inneren des Stützrohrs (1) angeordnet ist und das Stützrohr (1) umfangsverteilte Öffnungen (2) aufweist.

13. Elektrode nach Anspruch 12,
**dadurch gekennzeichnet,**
**dass** sie mit einer zwischen dem Stützrohr (1) und dem Elektrodennetz (3) oder Elektrodengitter angeordneten Geomembrane (4) versehen ist.

14. Elektrode nach einem der Ansprüche 11 bis 13,
**dadurch gekennzeichnet,**
**dass** das Stützrohr (1) mit einem Abfluss (7) zum Ausleiten von überschüssig zugeführtem Wasser (6) versehen ist.

15. Elektrode nach einem der Ansprüche 8 bis 10,
**dadurch gekennzeichnet,**
**dass** sie als Kathode ausgebildet ist und einen Abfluss (7) zur Entnahme von elektroosmotisch gewonnenem Eluat aufweist.

16. Elektrode nach den Ansprüchen 9 und 15,
**dadurch gekennzeichnet,**
**dass** die Innenwandung des Stützrohrs (1) zumindest teilweise mit einer Geomembrane (4) ausgekleidet ist.

17. Elektrode nach Anspruch 16,
**dadurch gekennzeichnet,**
**dass** die Geomembrane (4) zwischen dem Stützrohr (1) und einem Innenrohr (8) sitzt und dass der Abfluss (7) mit dem zwischen dem Stützrohr (1) und dem Innenrohr (8) gebildeten Ringraum in Verbindung steht.

18. Elektrode nach Anspruch 9 und einem der Ansprüche 15 bis 17,
**dadurch gekennzeichnet,**
**dass** das Stützrohr (1) nur in einem, im horizontal verlegten Zustand obenliegenden, Umfangsbereich flüssigkeitsdurchlässig ausgebildet ist.

19. Elektrode nach einem der Ansprüche 15 bis 18,
**dadurch gekennzeichnet,**
**dass** das Innere des Stützrohrs (1) mit Unterdruck beaufschlagbar ist.

20. Elektrode nach einem der Ansprüche 15 bis 19,
**dadurch gekennzeichnet,**
**dass** im Stützrohr (1) ein Aktivkohlefilter angeordnet ist.
